# EUROPEAN PATENT SPECIFICATION

(11) **EP 2 372 867 B1**
(45) Date of publication and mention of the grant of the patent: **12.08.2015**
(21) Application number: 11159648.2
(22) Date of filing: 24.03.2011
(51) Int. Cl.: H02J 7/00, H02J 7/34, H01M 10/44, H02H 9/00, H01M 10/48, H01M 10/42

(54) **A parallel device for a battery module and controlling method thereof**
Parallelvorrichtung für ein Batteriemodul und Steuerverfahren dafür
Dispositif parallèle pour module de batterie et procédé de contrôle correspondant

(30) Priority: 29.03.2010 CN 201010139260
(43) Date of publication of application: 05.10.2011
(73) Proprietor: Byd Company Limited, Shenzhen 518118 (CN)
(72) Inventor: Deng, Linwang, 518118 Shenzhen (CN); Zeng, Yu, 518118 Shenzhen (CN); Deng, Yaming, 518118 Shenzhen (CN)
(74) Representative: Gulde & Partner

(56) References cited:
- EP-A2- 1 335 484
- WO-A1-2010/018644
- US-A1- 2009 256 526
- US-A1- 2009 278 497
- US-B1- 7 199 556

## Description

### FIELD

The present disclosure generally relates to a battery module, more particularly, to a parallel device for the battery module and a controlling method thereof.

### BACKGROUND

In the prior art, when the battery groups in a battery module are connected together in parallel, usually the same electrodes are connected directly through wires or metallic channels to form the parallel battery groups to supply power to the external. However, because of the small resistance of the battery groups, when there is a large voltage difference between two battery groups, a large current shock will occur in the battery groups. If the value of the large current shock is larger than the maximum current value that the battery groups can bear, it will generate a bad effect on the battery groups and the other components, even damaging the battery groups and the other components.

WO 2010/018644A1 discloses a parallel device for a battery module including a plurality of battery groups, including a plurality of switching units, a plurality of second switches, and a controlling module configured to collect voltages of the battery groups, calculate the voltage differences between the voltages of the battery groups, compare the voltage differences with a voltage reference and control the first switch and the second switch to open or close according to the voltage comparison result.

### SUMMARY

The present invention is directed to solve at least one of the problems existing in the prior art. Accordingly, a parallel device for the battery module and a controlling method thereof are provided.

According to an aspect of the present invention, a parallel device for a battery module including a plurality of battery groups is provided. The parallel device for a battery module includes a plurality of battery groups, comprising: a plurality of switching units, each comprising a first switch and a load and each connected with a battery group in series to form a branch which is connected to other branches in parallel; a plurality of second switches, each connected with a switching unit in parallel; and a controlling module, connected with the first switch and the battery group and configured to collect voltages of the battery groups, calculate the voltage differences between the voltages of the battery groups, compare the voltage differences with a voltage reference and control the first switch and the second switch to open or close according to the voltage comparison result, wherein the voltage reference comprises a first voltage reference and a second voltage reference and the first voltage reference is no less than zero and the second voltage reference is greater than the first voltage reference, and the controlling module is further configured to: control the first switch and the second switch to open, when one voltage difference is no less than the second voltage reference; control the first switch to close and the second switch to open, when all the voltage differences are less than the second voltage reference and one voltage difference is no less than the first voltage reference; and control the first switch to open and the second switch to close, when all the voltage differences are less than the first voltage reference.

According to another aspect of the present invention, a controlling method of the parallel device for a battery module including a plurality of battery groups is provided. The controlling method of the parallel device for a battery module includes a plurality of battery groups, comprising the steps of: collecting a voltage of each battery group; calculating a voltage difference between two voltage values of the battery groups; comparing the voltage difference with the first voltage reference and the second voltage reference; controlling the first switch and the second switch to open, when one voltage difference is no less than the second voltage reference; controlling the first switch to close and the second switch to open, when all the voltage differences are less than the second voltage reference and one voltage difference is no less than the first voltage reference; and controlling the first switch to open and the second switch to close, when all the voltage differences are less than the first voltage reference.

In the present invention, the controlling module collects voltages of the battery groups, calculates the voltage difference between two voltage values of the battery groups, compares the voltage difference with the first and second voltage references, controls the first and second switch to open or close according to the voltage comparison result, which may eliminate the voltage differences between the voltages of the battery groups and make the internal current value be in the range of the allowed current for the battery groups or be zero, so a large current shock to the battery groups may be avoided and then the life of the battery groups may be extended and the reliability of the battery groups may be improved.

### BRIEF DESCRIPTION OF THE DRAWINGS

These and other aspects and advantages of the disclosure will become apparent and more readily appreciated from the following descriptions taken in conjunction with the drawings in which:
Fig. 1 is a block diagram of the parallel device for a battery module in some embodiments of the present invention;
Fig. 2 is another block diagram of the parallel device for a battery module in some embodiments of the present invention;
Fig. 3 is a flow chart of controlling method of the parallel device for a battery module in some embodiments of the present invention; and
Fig. 4 is another flow chart of controlling method of the parallel device for a battery module in some embodiments of the present invention.

### DETAILED DESCRIPTION

Reference will be made in detail to the embodiments of the present disclosure. The embodiments described herein with reference to the accompany drawings are explanatory and illustrative, which are used to generally understand the present disclosure. The embodiments shall not be construed to limit the present disclosure.

In the present invention, a parallel device for a battery module including a plurality of battery groups is provided. The parallel device for a battery module includes a plurality of battery groups, comprising: a plurality of switching units, each comprising a first switch and a load and each connected with a battery group in series to form a branch which is connected to other branches in parallel; a plurality of second switches, each connected with a switching unit in parallel; and a controlling module, connected with the first switch and the battery group and configured to collect voltages of the battery groups, calculate the voltage differences between the voltages of the battery groups, compare the voltage differences with a voltage reference and control the first switch and the second switch to open or close according to the voltage comparison result, wherein the voltage reference comprises a first voltage reference and a second voltage reference and the first voltage reference is no less than zero and the second voltage reference is greater than the first voltage reference, and the controlling module is further configured to: control the first switch and the second switch to open, when one voltage difference is no less than the second voltage reference; control the first switch to close and the second switch to open, when all the voltage differences are less than the second voltage reference and one voltage difference is no less than the first voltage reference; and control the first switch to open and the second switch to close, when all the voltage differences are less than the first voltage reference.

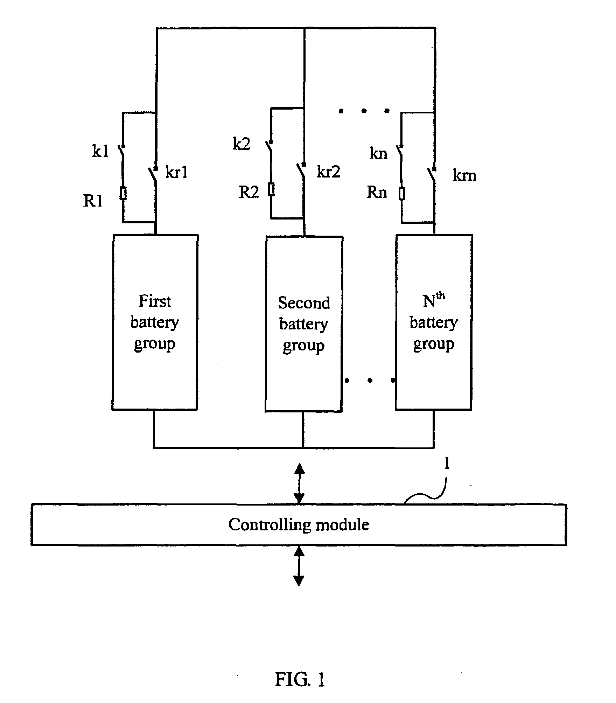

Referring to Fig. 1, the battery module includes a plurality of battery groups: the first battery group, the second battery group ... the N^{th} battery group. The parallel device for a battery module comprise: a plurality of switching units each comprising a first switch and a load and each connected with a battery group in series to form a branch which is connected to other branches in parallel; and a controlling module 1, connected with the first switch and the battery group. As shown in Fig. 1 the first switches are k1, k2...kn and the loads are R1, R2...Rn. The switch k1 is connected with R1 in series to from a first switching unit and the first switching unit is connected to the first battery group in series to from a first branch; the switch k2 is connected with R2 in series to from a second switching unit and the second switching unit is connected to the second battery group in series to from a second branch...and the switch kn is connected with Rn in series to from an N^{th} switching unit and the n switching unit is connected to the N^{th} battery group in series to from an N^{th} branch. In some embodiments of the present invention, the parallel device for a battery module further comprises a plurality of second switches kr1, kr2...krn, each connected with a switching unit in parallel. The switch kr1 is connected with the first switching unit, the switch kr2 is connected with the second switching unit ... and the switch krn is connected with the N^{th} switching unit.

The controlling module is configured to collect voltages of the battery groups, calculate the voltage differences U between the voltages of the battery groups, compare the voltage differences U with a voltage reference and control the first switches k1, k2...kn to open or close according to the voltage comparison result. In this embodiment of the present invention, the voltage of each of the battery groups is collected and the voltage difference is calculated, then the voltage difference is compared with the voltage reference. According to the comparison result it is judged whether the voltage difference is safe for the battery group. If it is safe, the controlling module controls the first switches k1, k2...kn to close, so the direct connection for the battery groups and a current shock to the battery groups may be avoided. In some embodiments of the present invention, the controlling module is further configured to collect a current value of each of the battery groups, compare the current value with a current reference I and control the first switch and the second switch to open or close according to the current comparison result. In some embodiments of the present invention, the controlling module is further configured to control the first switch and the second switch to open or close according to the voltage comparison result or the current comparison result. When the battery module is used as a power supply, the load in the switching unit will consume the power of the battery module, so when the voltage differences reach a balance or the voltage differences are eliminated, the second switches kr1, kr2...krn are controlled to close and the switching units are short circuits.

The voltage reference U comprises a first voltage reference U1 and a second voltage reference U2 and the value of the first voltage and the second voltage reference satisfies the formula of 0≤U1< U2. The loads R1, R2...Rn equal to each other. The voltage difference value is the absolute value voltage difference between the battery groups. In some embodiments of the present invention, the maximum current value that the battery groups may bear is I₀, and the value of the loads R1, R2...Rn is R. In some embodiments of the present invention, the value of the loads is larger than 1 ohm. U2 is no larger than 2I₀*R and 2I₀*R is larger than U1. When all the voltage differences are less than the second voltage reference and no less than zero, the first switches k1, k2 ... kn are controlled to close. In some embodiments of the present invention, when one voltage difference is no less than the second voltage reference U2, the corresponding first switch and the second switch are controlled to open and the highest voltage battery is controlled to discharge or the lowest voltage battery is controlled to charge until all the voltage differences between the battery groups are in the range of [0, U2).

In some embodiments of the present invention, the first switches are controlled to close in sequence. The first closing interval for the first switches k1 k2 ... kn is t, that is, when one of the first switches is closed, another one first switch is closed after the time of t, still other one first switch is closed after the time of t and the like until all the first switches are closed. The sequence for closing the first switches may be predefined. In some embodiments of the present invention, the time t is about 0.3-0.4S. In some embodiments of the present invention, the time t is about 0.35S.

In some embodiments of the present invention, when all the first switches are closed and all the current values are less than the current reference I and no less than zero, the second switches kr1 kr2...krn are controlled to close, and after a second closing interval, the first switches k1, k2...kn are control to open, which may make all the currents of the battery groups are no larger than the maximum current value that the battery groups may bear. In some embodiments of the present invention, in the controlling procedure for the first switch and the second switch, one of the second switches is closed and one of the first switches according to the one of the second switches is opened after a time interval, another one second switch is closed after the second closing interval and another one of the first switches according to the another one of the second switches is opened after the time interval, still other one second switch is closed after the second closing interval and still other one of the first switches according to the still other one of the second switches is opened after the time interval, and the like until all the second switches are closed and the first switches are opened. In some embodiments of the present invention, the value range of I is [0A, 0.5A]. In some embodiments of the present invention, the value of I is 0A.

In some embodiments of the present invention, when all the first switches are closed and all the voltage differences are less than the voltage reference U1 and no less than zero, the second switches kr1, kr2...krn are controlled to close, and after a second closing interval, the first switches k1, k2...kn are control to open, which may make all the currents of the battery groups are no larger than the maximum current value I₀ that the battery groups may bear. In some embodiments of the present invention, in the controlling procedure for the first switch and the second switch, one of the second switches is closed, another one second switch is closed after the second closing interval, still other one second switch is closed after the second closing interval and the like until all the second switches are closed. In some embodiments of the present invention, the value range of U is [0V, 0.5V]. In some embodiments of the present invention, the value of U is 0V.

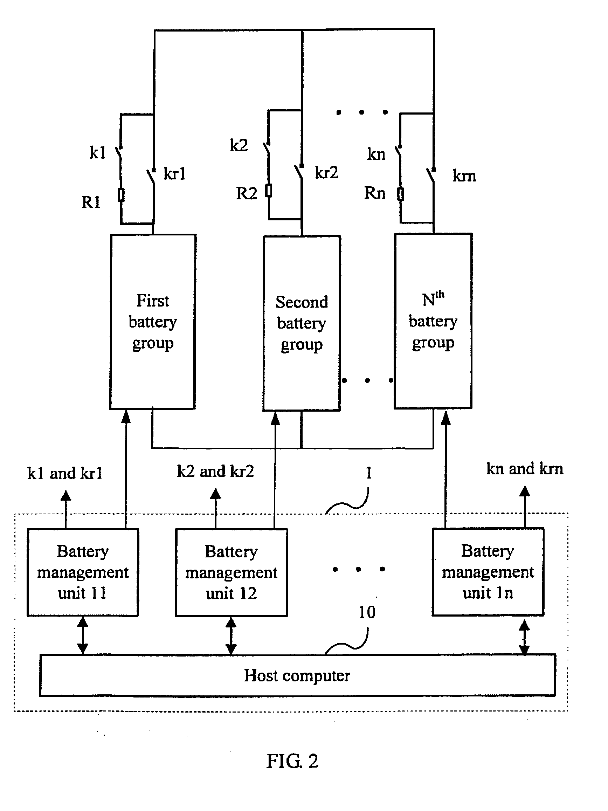

Referring to Fig. 2, the controlling module comprises a plurality of battery management units 11, 12...1n and a host computer 10. Each of the battery management units is connected with one battery group. As shown in Fig. 2, in some embodiments of the present invention, the battery management unit 11 is connected to the first battery group; the battery management unit 12 is connected to the second battery group ... and the battery management unit 1n is connected to the N^{th} battery group. The battery management unit is configured to collect the voltage and current value of the battery group, send the voltage and current value to the host computer and control the first switch and the second switch to open or close according to a control signal from the host computer; and the host computer is configured to calculate a voltage difference between two voltage values of the battery groups, compare the voltage differences with a voltage reference, compare the current values with a current reference and send a control signal to the battery management unit according to the voltage comparison result or the current comparison result.

According to another aspect of the present invention, a controlling method of the parallel device for a battery module including a plurality of battery groups is provided. The controlling method of the parallel device for a battery module includes a plurality of battery groups, comprising the steps of: collecting a voltage of each battery group; calculating a voltage difference between two voltage values of the battery groups; comparing the voltage difference with the first voltage reference and the second voltage reference; controlling the first switch and the second switch to open, when one voltage difference is no less than the second voltage reference; controlling the first switch to close and the second switch to open, when all the voltage differences are less than the second voltage reference and one voltage difference is no less than the first voltage reference; and controlling the first switch to open and the second switch to close, when all the voltage differences are less than the first voltage reference.

In some embodiments of the present invention, the controlling method further comprises the steps of: collecting a current value of each battery group; comparing the current values with a current reference; and control the first switch and the second switch to open or close according to the voltage comparison result or the current comparison result.

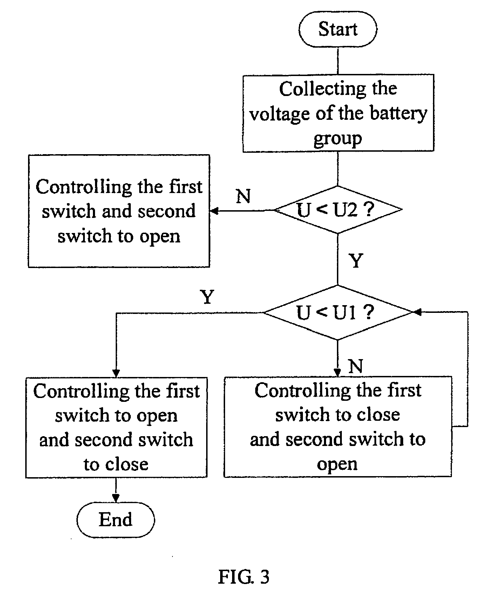

Referring to Fig. 3, the voltage reference U comprises a first voltage reference U1 and a second voltage reference U2 and the first voltage reference is no less than zero and the second voltage reference is greater than the first voltage reference. When one voltage difference is no less than the second voltage reference U2, the first switch and the second switch are controlled to open. When all the voltage differences are less than the second voltage reference U2 and one voltage difference is no less than the first voltage reference U1, the first switch is controlled to close and the second switch is controlled to open. When all the voltage differences are less than the first voltage reference, the first switch is controlled to open and the second switch is controlled to close.

In some embodiments of the present invention, the second switches are controlled to close in sequence, and after a second closing interval, the first switches are control to open. In some embodiments of the present invention, in the controlling procedure for the first switch and the second switch, one of the second switches is closed and one of the first switches according to the one of the second switches is opened after a time interval, another one second switch is closed after the second closing interval and another one of the first switches according to the another one of the second switches is opened after the time interval, still other one second switch is closed after the second closing interval and still other one of the first switches according to the still other one of the second switches is opened after the time interval, and the like until all the second switches are closed and the first switches are opened.

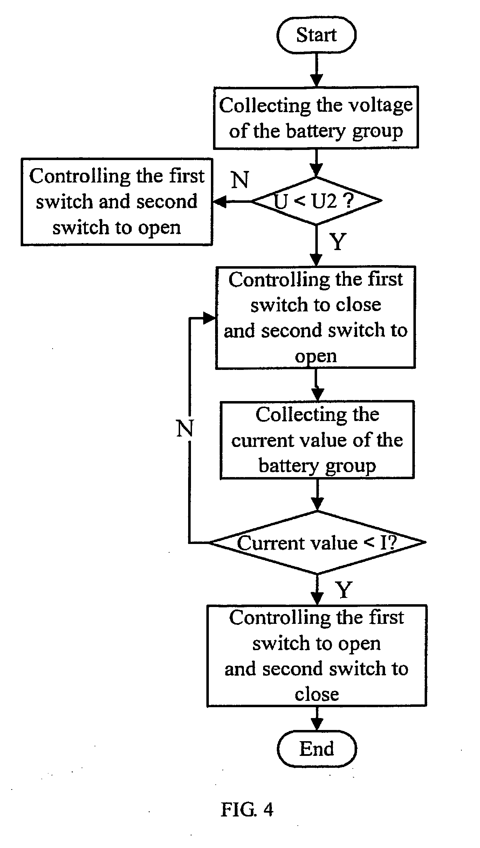

Referring to Fig. 4, when one voltage difference is no less than the second voltage reference U2, the first switch and the second switch are controlled to open. When all the voltage differences are less than the second voltage reference U2, the first switch is controlled to close and the second switch is controlled to open. When the first switches are closed, the current values of the battery group are collected and the current values are compared with the current reference I. When all the current values are less than the current reference I, the first switches are controlled to open and the second switches are controlled to close. When one current value is no less than the current reference, the first switches are controlled to close and the second switches are controlled to open.

In some embodiments of the present invention, the value of the voltage reference is 0. In the present invention, the controlling method collects voltages of the battery groups, calculates the voltage differences between the voltages of the battery groups, compares the voltage differences with a voltage reference and controls the first switch to open or close according to the voltage comparison result, which may eliminate the voltage differences between the voltages of the battery groups and make the internal current value be in the range of the allowed current for the battery group or be zero, so a large current shock to the battery groups may be avoided and then the life of the battery groups may be extended and the reliability of the battery groups may be improved.

It will be appreciated by those skilled in the art that changes could be made to the examples described above. It is understood, therefore, that this disclosure is not limited to the particular examples disclosed, but it is intended to cover modifications within the scope of the present disclosure as defined by the appended claims.

## Claims

1. A parallel device for a battery module including a plurality of battery groups, comprising:
a plurality of switching units, each comprising a first switch (k1, k2...kn) and a load (R1, R2...Rn) and each connected with a battery group in series to form a branch which is connected to other branches in parallel;
a plurality of second switches (kr1, kr2...krn), each connected with a switching unit in parallel; and
a controlling module (1), connected with the first switch (k1, k2...kn) and the battery group and configured to collect voltages of the battery groups, calculate the voltage differences between the voltages of the battery groups, compare the voltage differences with a voltage reference and control the first switch (k1, k2...kn) and the second switch (kr1, kr2...krn) to open or close according to the voltage comparison result, wherein the voltage reference comprises a first voltage reference and a second voltage reference and the first voltage reference is no less than zero and the second voltage reference is greater than the first voltage reference, and the controlling module (1) is further configured to:
control the first switch (k1, k2...kn) and the second switch (kr1, kr2...krn) to open, when one voltage difference is no less than the second voltage reference;
control the first switch (k1, k2...kn) to close and the second switch (kr1, kr2...krn) to open, when all the voltage differences are less than the second voltage reference and one voltage difference is no less than the first voltage reference; and
control the first switch (k1, k2...kn) to open and the second switch (kr1, kr2...krn) to close, when all the voltage differences are less than the first voltage reference.

2. The parallel device for a battery module of claim 1, wherein the resistance of a load is equal to each other, the range of the first voltage reference is 0V-0.5V and the second voltage reference is less than or equal to twice of the product of the resistance of the load and the maximum current value that the battery group bears.

3. The parallel device for a battery module of claim 1, wherein the controlling module (1) is further configured to collect current values of the battery groups, compare the current values with a current reference and control the first switch and the second switch to open or close according to the current comparison result.

4. The parallel device for a battery module of claim 3, wherein the controlling module is further configured to:
control the second switch (kr1, kr2...krn) to close and the first switch (k1, k2...kn) to open when all the current values are less than the current reference; and
control the second switch (kr1, kr2...krn) to open and the first switch (k1, k2...kn) to close when one current value is no less than the current reference.

5. The parallel device for a battery module of claim 3 or claim 4, the range of the current reference is 0A-0.5A.

6. The parallel device for a battery module of any of claims 1 to 5, wherein the controlling module (1) comprises a plurality of battery management units and a host computer (10), wherein
each of the battery management units (11, 12...1n) is connected with one battery group and the battery management unit is configured to collect the voltage and current value of the battery group, send the voltage and current value to the host computer and control the first switch and the second switch to open or close according to a control signal from the host computer (10); and
the host computer (10) is configured to calculate a voltage difference between two voltage values of the battery groups, compare the voltage differences with a voltage reference, compare the current values with a current reference and send a control signal to the battery management unit according to the voltage comparison result or the current comparison result.

7. A controlling method of the parallel device for a battery module including a plurality of battery groups of any of claims 1 to 6, comprising the steps of:
collecting a voltage of each battery group;
calculating a voltage difference between two voltage values of the battery groups;
comparing the voltage difference with the first voltage reference and the second voltage reference;
controlling the first switch and the second switch to open, when one voltage difference is no less than the second voltage reference;
controlling the first switch to close and the second switch to open, when all the voltage differences are less than the second voltage reference and one voltage difference is no less than the first voltage reference; and
controlling the first switch to open and the second switch to close, when all the voltage differences are less than the first voltage reference.

8. The controlling method of claim 7, wherein when the first switch (k1, k2...kn) is closed, the controlling method further comprises the steps of:
collecting a current value of each battery group;
comparing the current values with a current reference; and
control the first switch (k1, k2...kn) and the second switch (kr1, kr2...krn) to open or close according to the current comparison result; and
controlling the first switch (k1, k2...kn) to open, when the second switch (kr1, kr2...krn) is closed.

9. The controlling method of claim 8, wherein the step of controlling the first switch (k1, k2...kn) and the second switch (kr1, kr2...krn) to open or close according to the current comparison result further comprises the steps of:
controlling the second switch (kr1, kr2...krn) to close and the first switch (k1, k2...kn) to open when all the current values are less than the current reference; and
controlling the second switch (kr1, kr2...krn) to open and the first switch (k1, k2...kn) to close when one current value is no less than the current reference.

10. The controlling method of any of claims 8 to 9, the range of the current reference is 0A-0.5A.

11. The controlling method of claim 7, wherein the resistance of a load is equal to each other, the range of the first voltage reference is 0V-0.5V and the second voltage reference is less than or equal to twice of the product of the resistance of the load and the maximum current value that the battery group bears.

## Patentansprüche

1. Parallelvonichtung für ein Batteriemodul, das eine Vielzahl von Batteriegruppen aufweist, umfassend:
eine Vielzahl von Schalteinheiten, von denen jede einen ersten Schalter (k1, k2 ... kn) und eine Last (R1, R2 ... Rn) aufweist und jede mit einer Batteriegruppe in Reihe geschaltet ist, um einen Zweig auszubilden, der mit anderen Zweigen parallel geschaltet ist;
eine Vielzahl zweiter Schalter (kr1, kr2 ... krn), von denen jeder mit einer Schalteinheit parallel geschaltet ist; und
ein Steuermodul (1), das mit dem ersten Schalter (k1, k2 ... kn) und der Batteriegruppe parallel geschaltet ist und konfiguriert ist, um Spannungen der Batteriegruppen zu sammeln, die Spannungsdifferenzen zwischen den Spannungen der Batteriegruppen zu berechnen, die Spannungsdifferenzen mit einer Spannungsreferenz zu vergleichen und den ersten Schalter (k1, k2 ... kn) und den zweiten Schalter (kr1, kr2 ... krn) zu steuern, um sich dem Ergebnis des Spannungsvergleichs entsprechend zu öffnen oder zu schließen, wobei die Spannungsreferenz eine erste Spannungsreferenz und eine zweite Spannungsreferenz aufweist und die erste Spannungsreferenz nicht kleiner als null ist und die zweite Spannungsreferenz größer als die erste Spannungsreferenz ist, und wobei das Steuermodul (1) ferner konfiguriert ist, um:
den ersten Schalter (k1, k2 ... kn) und den zweiten Schalter (kr1, kr2 ... kn) zu steuern, um sich öffnen, wenn eine Spannungsdifferenz nicht kleiner als die zweite Spannungsreferenz ist;
den ersten Schalter (k1, k2 ... kn) zu steuern, um sich zu schließen, und den zweiten Schalter (kr1, kr2 ... krn) zu steuern, um sich zu öffnen, wenn alle Spannungsdifferenzen kleiner als die zweite Spannungsreferenz sind und eine Spannungsdifferenz nicht kleiner als die erste Spannungsreferenz ist; und
den ersten Schalter (k1, k2 ... kn) zu steuern, um sich zu öffnen, und den zweiten Schalter (kr1, kr2 ... krn) zu steuern, um sich zu schließen, wenn alle Spannungsdifferenzen kleiner als die erste Spannungsreferenz sind.

2. Parallelvonichtung für ein Batteriemodul nach Anspruch 1, wobei der Widerstand einer Last gleich allen anderen ist, der Bereich der ersten Spannungsreferenz 0V-0,5V ist und die zweite Spannungsreferenz kleiner oder gleich dem zweifachen des Produktes aus dem Widerstand der Last und dem höchsten Stromwert, den die Batteriegruppe trägt, ist.

3. Parallelvorrichtung für ein Batteriemodul nach Anspruch 1, wobei das Steuermodul (1) ferner konfiguriert ist, um Stromwerte der Batteriegruppen zu sammeln, die Stromwerte mit einer Stromreferenz zu vergleichen und den ersten Schalter und den zweiten Schalter zu steuern, um sich dem Ergebnis des Stromvergleichs entsprechend zu öffnen oder zu schließen.

4. Parallelvorrichtung für ein Batteriemodul nach Anspruch 3, wobei das Steuermodul ferner konfiguriert ist, um:
den zweiten Schalter (kr1, kr2, ... krn) zu steuern, um sich zu schließen, und den ersten Schalter (k1, k2 ... kn) zu steuern, um sich zu öffnen, wenn alle Stromwerte kleiner als die Stromreferenz sind; und
den zweiten Schalter (kr1, kr2 ... krn) zu steuern, um sich zu öffnen, und den ersten Schalter (k1, k2 ... kn) zu steuern, um sich zu schließen, wenn ein Stromwert nicht kleiner als die Stromreferenz ist.

5. Parallelvorrichtung für ein Batteriemodul nach Anspruch 3 oder 4, wobei der Bereich der Stromreferenz 0A-0,5A ist.

6. Parallelvorrichtung für ein Batteriemodul nach einem der Ansprüche 1 bis 5, wobei das Steuermodul (1) eine Vielzahl von Batteriemanagementeinheiten und einen Host-Computer (10) aufweist, wobei
jede der Batteriemanagementeinheiten (11, 12 ... 1n) mit einer Batteriegruppe verbunden ist und die Batteriemanagementeinheit konfiguriert ist, um den Spannungs- und Stromwert der Batteriegruppe zu sammeln, den Spannungs- und Stromwert dem Host-Computer zu senden und den ersten Schalter und den zweiten Schalter zu steuern, um sich einem Steuersignal vom Host-Computer (10) entsprechend zu öffnen oder zu schließen; und
der Host-Computer (10) konfiguriert ist, um eine Spannungsdifferenz zwischen zwei Spannungswerten der Batteriegruppen zu berechnen, die Spannungsdifferenzen mit einer Spannungsreferenz zu vergleichen, die Stromwerte mit einer Stromreferenz zu vergleichen und der Batteriemanagementeinheit dem Ergebnis des Spannungsvergleichs oder dem Ergebnis des Stromvergleichs entsprechend ein Steuersignal zu senden.

7. Verfahren zum Steuern der Parallelvorrichtung für ein Batteriemodul, aufweisend eine Vielzahl von Batteriegruppen nach einem der Ansprüche 1 bis 6, aufweisend die folgenden Schritte:
Sammeln einer Spannung jeder Batteriegruppe;
Berechnen einer Spannungsdifferenz zwischen zwei Spannungswerten der Batteriegruppen;
Vergleichen der Spannungsdifferenz mit der ersten Spannungsreferenz und der zweiten Spannungsreferenz;
Steuern des ersten Schalters und des zweiten Schalters, um sich zu öffnen, wenn eine Spannungsdifferenz nicht kleiner als die zweite Spannungsreferenz ist,
Steuern des ersten Schalters, um sich zu schließen, und des zweiten Schalters, um sich zu öffnen, wenn alle Spannungsdifferenzen kleiner als die zweite Spannungsreferenz sind und eine Spannungsdifferenz nicht kleiner als die erste Spannungsreferenz ist; und
Steuern des ersten Schalters, um sich zu öffnen, und des zweiten Schalters, um sich zu schließen, wenn alle Spannungsdifferenzen kleiner als die erste Spannungsreferenz sind.

8. Steuerverfahren nach Anspruch 7, wobei, wenn der erste Schalter (k1, k2 ... kn) geschlossen ist, das Steuerverfahren ferner die folgenden Schritte aufweist:
Sammeln eines Stromwerts jeder Batteriegruppe;
Vergleichen der Stromwerte mit einer Stromreferenz; und
Steuern des ersten Schalters (k1, k2 ... kn) und des zweiten Schalters (kr1, kr2 ... krn), um sich dem Ergebnis des Stromvergleichs entsprechend zu öffnen oder zu schließen; und
Steuern des ersten Schalters (k1, k2 ... kn), um sich zu öffnen, wenn der zweite Schalter (kr1, kr2 ... krn) geschlossen ist.

9. Steuerverfahren nach Anspruch 8, wobei der Schritt des Steuerns des ersten Schalters (k1, k2 ... kn) und des zweiten Schalters (kr1, kr2 ... krn), um sich dem Ergebnis des Stromvergleichs entsprechend zu öffnen oder zu schließen, ferner die folgenden Schritte aufweist:
Steuern des zweiten Schalters (kr1, kr2 ... krn), um sich zu schließen, und des ersten Schalters (k1, k2 ... kn), um sich zu öffnen, wenn alle Stromwerte kleiner als die Stromreferenz sind; und
Steuern des zweiten Schalters (kr1, kr2 ... krn), um sich zu öffnen, und des ersten Schalters (k1, k2 ... kn), um sich zu schließen, wenn ein Stromwert nicht kleiner als die Stromreferenz ist.

10. Steuerverfahren nach einem der Ansprüche 8 bis 9, wobei der Bereich der Stromreferenz 0A-0,5A ist.

11. Steuerverfahren nach Anspruch 7, wobei der Widerstand einer Last gleich allen anderen ist, der Bereich der ersten Spannungsreferenz 0V-0,5V ist und die zweite Spannungsreferenz kleiner oder gleich dem zweifachen des Produktes aus dem Widerstand der Last und dem höchsten Stromwert, den die Batteriegruppe trägt, ist.

## Revendications

1. Dispositif parallèle pour un module de batterie, comprenant une pluralité de groupes de batteries, comprenant :
une pluralité d'unités de commutation, chacune comprenant un premier commutateur (k1, k2 ... kn) et une charge (R1, R2 ... Rn) et chacune étant connectée en série avec un groupe de batteries pour former une branche qui est connectée en parallèle avec d'autres branches ;
une pluralité de seconds commutateurs (kr1, kr2 ... krn), chacune étant connectée en parallèle avec une unité de commutation ; et
un module de contrôle (1) connecté au premier commutateur (k1, k2 ... kn) et le groupe de batteries, et configuré pour recueillir des tensions des groupes de batteries, calculer les différences de tension entre les tensions des groupes de batteries, comparer les différences de tension à une référence de tension et contrôler le premier commutateur (k1, k2 ... kn) et le second commutateur (kr1, kr2 ... krn) pour s'ouvrir ou se fermer selon le résultat de la comparaison des tensions, la référence de tension comprenant une première référence de tension et une seconde référence de tension, et la première référence de tension n'étant pas inférieure à zéro et la seconde référence de tension étant supérieure à la première référence de tension, et le module de contrôle (1) étant configuré en outre pour :
contrôler le premier commutateur (k1, k2 ... kn) et le second commutateur (kr1, kr2 ... krn) pour s'ouvrir si une différence de tension n'est pas inférieure à la seconde référence de tension ;
contrôler le premier commutateur (k1, k2 ... kn) pour se fermer et le second commutateur (kr1, kr2 ... krn) pour s'ouvrir si toutes le différences de tension sont inférieures à la seconde référence de tension et une différence de tension n'est pas inférieure à la première référence de tension ; et
contrôler le premier commutateur (k1, k2 ... kn) pour s'ouvrir et le second commutateur (kr1, kr2 ... krn) pour se fermer si toutes les différences de tension sont inférieures à la première référence de tension.

2. Dispositif parallèle pour un module de batterie selon la revendication 1, dans lequel la résistance d'une charge égale toutes les autres, la plage de la première référence de tension est 0V-0,5V, et la seconde référence de tension est inférieure ou égale à deux fois le produit de la résistance de la charge et la valeur du courant maximale que porte le groupe de batteries.

3. Dispositif parallèle pour un module de batterie selon la revendication 1, dans lequel le module de contrôle (1) est configuré en outre pour recueillir des valeurs de courant des groupes de batteries, comparer les valeurs de courant à une référence de courant et contrôler le premier commutateur et le second commutateur pour s'ouvrir ou se fermer selon le résultat de la comparaison des courants.

4. Dispositif parallèle pour un module de batterie selon la revendication 3, dans lequel le module de contrôle est configuré en outre pour :
contrôler le second commutateur (kr1, kr2 ... krn) pour se fermer et le premier commutateur (k1, k2 ... kn) pour s'ouvrir si toutes les valeurs de courant sont inférieures à la référence de courant ; et
contrôler le second commutateur (kr1, kr2 ... krn) pour s'ouvrir et le premier commutateur (k1, k2 ... kn) pour se fermer si une valeur de courant n'est pas inférieure à la référence de courant.

5. Dispositif parallèle pour un module de batterie selon les revendications 3 ou 4, la plage de la référence de courant étant 0A-0,5A.

6. Dispositif parallèle pour un module de batterie selon l'une des revendications 1 à 5, dans lequel le module de contrôle (1) comprend une pluralité d'unités de gestion de batterie et un ordinateur hôte (10), dans lequel
chacune des unités de gestion de batterie (11, 12 ... 1n) est connectée à un groupe de batteries, et l'unité de gestion de batterie est configurée pour recueillir la valeur de tension et de courant du groupe de batteries, envoyer la valeur de tension et de courant à l'ordinateur hôte et contrôler le premier commutateur et le second commutateur pour s'ouvrir ou se fermer selon un signal de contrôle de l'ordinateur hôte (10) ; et
l'ordinateur hôte (10) est configuré pour calculer une différence de tension entre deux valeurs de tension des groupes de batteries, comparer les différences de tension à une référence de tension, comparer les valeurs de courant à une référence de courant et envoyer un signal de contrôle à l'unité de gestion de batterie selon le résultat de la comparaison des tensions ou le résultat de la comparaison des courants.

7. Procédé de contrôle du dispositif parallèle pour un module de batterie, comprenant une pluralité de groupes de batteries selon l'une des revendications 1 à 6, comprenant les étapes suivantes :
recueillir une tension de chaque groupe de batteries ;
calculer une différence de tension entre deux valeurs de tension des groupes de batteries ;
comparer la différence de tension à la première référence de tension et la seconde référence de tension ;
contrôler le premier commutateur et le second commutateur pour s'ouvrir si une différence de tension n'est pas inférieure à la seconde référence de tension ;
contrôler le premier commutateur pour se fermer et le second commutateur pour s'ouvrir si toutes les différences de tension sont inférieures à la seconde référence de tension et une différence de tension n'est pas inférieure à la première référence de tension, et
contrôler le premier commutateur pour s'ouvrir et le second commutateur pour se fermer si toutes les différences de tension sont inférieures à la première référence de tension.

8. Procédé de contrôle selon la revendication 7, dans lequel, si le premier commutateur (k1, k2 ... kn) est fermé, le procédé de contrôle comprend en outre les étapes suivantes :
recueillir une valeur de courant de chaque groupe de batteries ;
comparer les valeurs de courant à une référence de courant ; et
contrôler le premier commutateur (k1, k2 ... kn) et le second commutateur (kr1, kr2 ... krn) pour s'ouvrir ou se fermer selon le résultat de la comparaison des courants ; et
contrôler le premier commutateur (k1, k2 ... kn) pour s'ouvrir si le second commutateur (kr1, kr2 ... krn) est fermé.

9. Procédé de contrôle selon la revendication 8, dans lequel l'étape de contrôler le premier commutateur (k1, k2 ... kn) et le second commutateur (kr1, kr2 ... krn) pour s'ouvrir ou se fermer selon le résultat de la comparaison des courants comprend en outre les étapes suivantes :
contrôler le second commutateur (kr1, kr2 ... krn) pour se fermer et le premier commutateur (k1, k2 ... kn) pour s'ouvrir si toutes les valeurs de courant sont inférieures à la référence de courant ; et
contrôler le second commutateur (kr 1, kr2 ... krn) pour s'ouvrir et le premier commutateur (k1, k2 ... kn) pour se fermer si une valeur de courant n'est pas inférieure à la référence de courant.

10. Procédé de contrôle selon l'une des revendications 8 à 9, la plage de la référence de courant étant 0A-0,5A.

11. Procédé de contrôle selon la revendication 7, dans lequel la résistance d'une charge égale toutes les autres, la plage de la première référence de tension est 0V-0,5V, et la seconde référence de tension est inférieure ou égale à deux fois le produit de la résistance de la charge et la valeur du courant maximale que porte le groupe de batteries.
